# DEMANDE DE BREVET EUROPEEN

(11) **EP 4 636 507 A1**
(43) Date de publication de la demande: **22.10.2025**
(21) Numéro de dépôt: 24209295.5
(22) Date de dépôt: 28.10.2024
(51) Int. Cl.: G04B 19/18, G04B 19/30

(54) **MONTRE COMPRENANT UN DISPOSITIF D'ÉCLAIRAGE D'UN AFFICHAGE ANALOGIQUE**

(30) Priorité: 19.04.2024 EP 24201470
(71) Demandeur: The Swatch Group Research and Development Ltd, 2074 Marin (CH)
(72) Inventeur: TORTORA, Pierpasquale, 2000 Neuchâtel (CH)
(74) Mandataire: ICB SA

(57) **Abrégé**

La montre (2) comprend un rehaut (14), dont la surface latérale intérieure (28) définit latéralement un espace d'affichage (70), et un dispositif d'éclairage (20) comprenant au moins une source de lumière (10) alimentée par une source d'électricité de la montre. Le dispositif d'éclairage comprend un élément au moins semi-transparent (12), en particulier formant le rehaut, qui est agencé au-dessus de ladite au moins une source de lumière et présente :
- une surface inférieure d'injection (22) configurée pour permettre une injection dans l'élément au moins semi-transparent d'au moins une majeure partie de la lumière (30) fournie par ladite au moins une source lumineuse,
- une surface latérale de sortie (26) par laquelle au moins une majeure partie de la lumière injectée dans l'élément au moins semi-transparent peut sortir, et
- une surface intermédiaire (24) configurée pour recevoir, sans réflexion antérieure, au moins une majeure partie de ladite lumière injectée, et pour réfléchir substantiellement ladite au moins une majeure partie de ladite lumière injectée en direction de la surface latérale de sortie.

## Description

### Domaine technique de l'invention

La présente invention concerne une montre comprenant une boîte munie d'un verre, un mouvement, un dispositif d'affichage analogique, un rehaut dont la surface latérale intérieure définit un espace d'affichage pour un dispositif d'affichage analogique, et un dispositif d'éclairage agencé pour fournir de la lumière dans l'espace d'affichage au travers de la surface latérale intérieure du rehaut. Le dispositif d'éclairage comprend au moins une source de lumière qui est alimentée par une source d'électricité de la montre.

### Arrière-plan technologique

Plusieurs documents de l'art antérieur décrivent des montres comprenant un dispositif d'éclairage agencé pour pouvoir fournir de la lumière dans un espace d'affichage dans lequel est situé au moins partiellement un affichage analogique, notamment des aiguilles, au travers de la surface latérale intérieure d'un rehaut définissant latéralement l'espace d'affichage.

Le document US 4,705,407 décrit un rehaut de montre qui forme un anneau diffuseur de lumière présentant au moins une cavité dans laquelle est introduit une source de lumière. Un enseignement similaire est donné dans le document US 4,908,739 et le document CH 677306. De tels dispositifs d'éclairage de l'espace d'affichage ne permettent pas d'obtenir angulairement une diffusion homogène de lumière. De plus, les sources de lumière, généralement non directionnelles, incorporées dans des cavités du rehaut engendrent des zones fortement lumineuses sur la surface latérale intérieure du rehaut et aussi une illumination intense des régions adjacentes respectives dans l'espace d'affichage et ainsi des zones du cadran situées à proximité, ce qui pose un problème car on obtient un éclairage du cadran qui n'est pas du tout uniforme. Ceci perturbe une bonne lecture de l'affichage analogique occupant l'espace d'affichage et pose un problème esthétique.

Les documents CH 691333 et EP 1050711 ont proposé des dispositifs pour résoudre en partie les problèmes susmentionnés. Dans ces deux documents, le rehaut forme un guide de lumière annulaire mais non fermé sur lui-même, car au moins un logement est prévu le long de ce guide de lumière pour recevoir deux diodes électroluminescentes (deux LEDs) agencées de manière que leur axe d'émission principal soit tangent à un cercle central du guide de lumière annulaire, pour que la lumière de ces diodes soit substantiellement injectée dans le guide de lumière annulaire. Ensuite, dans le but d'obtenir un éclairage du cadran angulairement uniforme, diverses variantes sont proposées pour obtenir un coefficient d'extraction orthogonale de lumière qui augmente avec la distance à la diode la plus proche, de sorte à obtenir une intensité lumineuse sensiblement homogène pour la lumière sortant du rehaut dans l'espace d'affichage.

Ces réalisations présentent au moins deux inconvénients. Premièrement, la conception et la fabrication de guides de lumière ayant un coefficient d'extraction de la lumière angulairement variable, lequel doit être maîtrisé pour assurer un éclairage uniforme du cadran, sont complexes. Deuxièmement, les logements prévus dans le rehaut pour les diodes sont inesthétiques et engendrent des zones sombres latérales et des zones adjacentes du cadran moins éclairées, ce qui va à l'encontre de l'objectif recherché. Un mode de réalisation particulier est décrit en référence aux Figures 6 et 6A dans le document EP 1050711, lequel répond partiellement au problème de la zone inesthétique et sombre à l'endroit des logements prévus le long du rehaut dans les autres modes de réalisation. Dans ce mode de réalisation particulier, une seule source de lumière peu étendue est placée sous le rehaut formant guide de lumière, lequel présente alors une rainure transversale de profil globalement triangulaire pour réfléchir la lumière dans le guide de lumière annulaire principalement selon l'axe géométrique central de ce guide de lumière annulaire, c'est-à-dire tangentiellement à cet axe géométrique central et donc perpendiculairement au rayon du guide de lumière. La rainure est inesthétique et elle engendre aussi une zone plus sombre le long du rehaut. De plus, on comprend que la quantité de lumière totalement injectée dans l'espace d'affichage est limitée et a priori faible avec une seule source de lumière du type quasi ponctuelle.

Un autre dispositif d'éclairage de l'espace d'affichage, dans lequel sont situées des aiguilles du dispositif d'affichage analogique, est décrit dans le document EP 1094373. Ce dispositif d'éclairage permet de résoudre d'une certaine manière les problèmes susmentionnées, mais la fabrication et le montage de ce dispositif d'éclairage sont relativement complexes et délicats. Il est prévu ici de fournir une bande électroluminescente qui est orientée verticalement et refermée sur elle-même pour former un cylindre capable d'éclairer le volume cylindrique qu'il entoure, la bande électroluminescente cylindrique étant prolongée localement par une bandelette de connexion qui descend verticalement en direction du fond de la boîte dans une région latérale du mouvement. Ensuite, une bague plastique translucide, formant un rehaut et sensée maintenir en place la bande électroluminescente dans la boîte, est introduite à l'intérieur de cette bande électroluminescente. Selon la description, la bande électroluminescente et la bandelette sont découpées dans une feuille électroluminescente. On remarquera que deux zones / pistes conductrices isolées l'une de l'autre, déposées sur la surface extérieure de la bande électroluminescente et la bandelette, sont nécessaires pour pouvoir alimenter électriquement la bande électroluminescente. Une telle réalisation est complexe. De plus, une telle bande électroluminescente nécessite une alimentation avec une tension relativement élevée et une haute fréquence, ce qui a pour conséquence que le circuit d'alimentation est coûteux et consomme beaucoup d'énergie électrique. A noter aussi que la lumière produite par des feuilles électroluminescentes du type divulgué est bleue-verte, ce qui colore les surfaces éclairées sans possibilité de variation (pas de choix de couleurs ou blanc).

Un dispositif de connexion électrique à une batterie, peu convaincant, comprend une patte de contact coudée qui doit venir appuyer derrière la bandelette de connexion. On comprend que la connexion électrique de la bande électroluminescente à une batterie est délicate et peu sûre. On obtient certes un éclairage uniforme de l'espace d'affichage, mais le dispositif de génération de lumière de forme cylindrique, agencé derrière un rehaut annulaire translucide, est relativement complexe à réaliser, à monter et à connecter électriquement à la batterie. La personne du métier pourrait éventuellement envisager remplacer la bande électroluminescente cylindrique divulguée par une bande flexible du type OLED (de l'anglais Organic Light Emitting Diode', en français 'diode électroluminescente organique') qui donne aussi une source lumineuse homogène et continue. Cependant, les structures OLED flexibles sont assez difficiles à fabriquer et coûteuses. De plus, si on veut avoir une source lumineuse OLED fiable et durable, les OLEDs doivent être enfermées sous vide d'air dans un logement en verre ou cristal. Des bandes de verre flexibles existent, mais sont généralement fragiles. Finalement, étant donné que les OLEDs doivent être protégées de l'air, le scellement d'un verre ou cristal de protection au-dessus des OLEDs requière une grande largeur du substrat relativement à la largeur de la zone optiquement active. Ceci augmente l'encombrement du dispositif lumineux, ce qui est particulièrement problématique pour une structure annulaire verticale incorporée dans une montre au niveau de l'affichage analogique.

### Résumé de l'invention

L'invention a pour objectif principal de résoudre les problèmes et inconvénients des dispositifs d'éclairage présentés précédemment. Un premier but est de fournir une montre munie d'un dispositif d'éclairage d'un espace d'affichage, au travers de la surface latérale intérieure d'un rehaut, qui soit relativement aisé à fabriquer et à monter dans la montre. Ensuite, un deuxième but de l'invention est d'obtenir une montre qui soit esthétique et adaptée à une montre haut de gamme. Un autre but est de fournir un dispositif d'éclairage produisant un éclairage qui soit angulairement uniforme et qui permette notamment d'éclairer un cadran de manière assez homogène et aussi avec une intensité relativement forte.

A cet effet, l'invention concerne une montre comprenant une boîte munie d'un verre, un mouvement, un dispositif d'affichage analogique, un rehaut dont la surface latérale intérieure définit latéralement un espace d'affichage pour le dispositif d'affichage analogique, et un dispositif d'éclairage agencé pour pouvoir fournir de la lumière dans l'espace d'affichage au travers de ladite surface latérale intérieure, le dispositif d'éclairage comprenant au moins une source de lumière alimentée par une source d'électricité de la montre. Le dispositif d'éclairage comprend en outre un élément au moins semi-transparent formant le rehaut ou entourant le rehaut, lequel est dans le dernier cas au moins semi-transparent en direction de l'espace d'affichage pour une lumière fournie par ladite au moins une source lumineuse et incidente sur une surface latérale extérieure de ce rehaut. L'élément au moins semi-transparent est agencé au-dessus de ladite au moins une source de lumière et présente :
- une surface inférieure d'injection qui est configurée pour permettre une injection dans l'élément au moins semi-transparent d'au moins une majeure partie de la lumière fournie par ladite au moins une source lumineuse ;
- une surface latérale de sortie par laquelle au moins une majeure partie de la lumière injectée dans l'élément au moins semi-transparent peut sortir de cet élément pour pénétrer dans l'espace d'affichage directement ou respectivement au travers du rehaut au moins semi-transparent ; et
- une surface intermédiaire configurée pour recevoir, sans réflexion antérieure, au moins une majeure partie de ladite lumière injectée, et pour réfléchir substantiellement ladite au moins une majeure partie de ladite lumière injectée en direction de la surface latérale de sortie.

Selon un mode de réalisation préféré, l'élément au moins semi-transparent est agencé de manière que la réflexion de ladite au moins une majeure partie de ladite lumière injectée est obtenue par une réflexion interne sur sa surface intermédiaire due à une différence d'indices de réfraction entre l'élément au moins semi-transparent et le milieu situé directement derrière celui-ci.

Selon une variante avantageuse, l'élément au moins semi-transparent forme un anneau, circulaire ou autre, qui est continu et fermé sur lui-même. Selon une variante préférée, la surface inférieure d'injection de cet élément forme une lentille annulaire positive qui est agencée de manière à pouvoir diriger, dans un quelconque plan transversal perpendiculaire à un axe annulaire central de la lentille annulaire positive, sensiblement la totalité de la lumière injectée, se propageant dans ce quelconque plan transversal, en direction de la surface intermédiaire de l'élément annulaire.

Dans un mode de réalisation avantageux, la surface intermédiaire de l'élément au moins semi-transparent est configurée pour collimater, dans le quelconque plan transversal susmentionné, la lumière injectée et dirigée dans la direction de cette surface intermédiaire par la lentille annulaire positive, et pour que cette lumière collimatée soit substantiellement, de préférence sensiblement en totalité incidente sur la surface latérale de sortie de l'élément au moins semi-transparent.

Dans une variante avantageuse, la surface latérale de sortie de l'élément au moins semi-transparent est agencée pour permettre à la lumière collimatée et incidente sur cette surface latérale de sortie de sortir de cet élément par réfraction.

### Brève description des figures

L'invention sera décrite ci-après de manière plus détaillée à l'aide des dessins annexés, donnés à titre d'exemples nullement limitatifs, dans lesquels :
- la Figure 1 montre, en coupe transversale partielle, un premier mode de réalisation d'une montre selon l'invention ;
- la Figure 2 est un agrandissement d'une partie de la Figure 1 ;
- la Figure 3 est une vue en perspective d'un élément au moins semi-transparent du dispositif d'éclairage, cet élément formant un rehaut dans la montre de la Figure 1 ;
- la Figure 4 est un graphe de l'intensité lumineuse fournie par le dispositif d'éclairage le long d'une diagonale d'un cadran de la montre du premier mode de réalisation ;
- la Figure 5 montre, en coupe transversale partielle, un deuxième mode de réalisation d'une montre selon l'invention ;
- la Figure 6 montre, en coupe transversale horizontale, un troisième mode de réalisation d'une montre selon l'invention ;
- Les Figures 7 et 8 sont des coupes transversales verticales, respectivement selon les lignes de coupe VII-VII et VIII-VIII, de la montre de la Figure 6.

### Description détaillée de l'invention

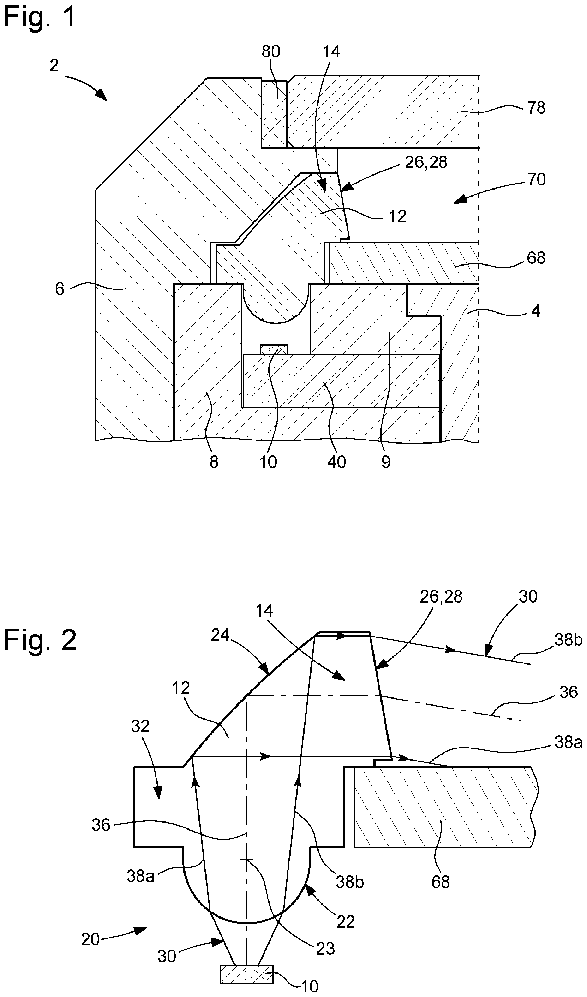

En référence aux Figures 1 à 4, on décrira un premier mode de réalisation d'une montre selon l'invention.

La montre 2 comprend une boîte 6 munie d'un verre 78, un mouvement 4, un dispositif d'affichage analogique (non représenté pour ne pas charger le dessin), un rehaut 14 dont la surface latérale intérieure 28 définit latéralement un espace d'affichage 70 pour le dispositif d'affichage analogique. On notera que le rehaut ne porte pas le verre dans la variante représentée, mais dans une autre variante le rehaut peut définir une surface supérieure formant une butée pour le verre et avec laquelle le verre est en contact. Cependant, dans cette autre variante, le joint d'étanchéité 80 est avantageusement comprimé entre la surface latérale du verre et une surface verticale de la lunette de la boîte. Dans le cadre de l'invention, le rehaut définit latéralement, partiellement dans la variante représentée et entièrement dans ladite autre variante, un espace d'affichage pour un affichage analogique.

La montre 2 comprend en outre un dispositif d'éclairage 20 agencé pour pouvoir fournir de la lumière 30 dans l'espace d'affichage 70 au travers de ladite surface latérale intérieure 28, le dispositif d'éclairage comprenant au moins une source de lumière 10 alimentée par une source d'électricité de la montre (non représentée dans ce mode de réalisation, par exemple un accumulateur d'énergie électrique). De manière remarquable, le dispositif d'éclairage 20 comprend un élément au moins semi-transparent 12, lequel forme le rehaut 14 dans ce premier mode de réalisation.

De manière générale, l'élément au moins semi-transparent 12 est agencé au-dessus de ladite au moins une source de lumière 10 et présente :
- une surface inférieure d'injection 22 qui est configurée pour permettre une injection dans l'élément au moins semi-transparent d'au moins une majeure partie de la lumière 30 fournie par ladite au moins une source lumineuse 10,
- une surface latérale de sortie 26 par laquelle au moins une majeure partie de la lumière injectée (représentée par deux lignes 38a, 38b définissant schématiquement une enveloppe pour la lumière utile) dans l'élément au moins semi-transparent 12 peut sortir de cet élément au moins semi-transparent pour pénétrer dans l'espace d'affichage 70, et
- une surface intermédiaire 24 qui est configurée pour recevoir, sans réflexion antérieure, au moins une majeure partie de ladite lumière injectée 38a, 38b, et pour réfléchir substantiellement ladite au moins une majeure partie de ladite lumière injectée en direction de la surface latérale de sortie 26.

Dans le premier mode de réalisation, la surface latérale de sortie 26 de l'élément au moins semi-transparent 12 est confondue avec la surface latérale intérieure 28 du rehaut 14, ce dernier étant formé par l'élément 12 qui définit ainsi la surface latérale intérieure 28.

Selon une variante avantageuse, l'élément au moins semi-transparent 12 est agencé de manière que la réflexion de ladite au moins une majeure partie de ladite lumière injectée est une réflexion interne sur la surface intermédiaire due à une différence d'indices de réfraction entre l'élément au moins semi-transparent et le milieu situé directement derrière celui-ci, à savoir l'indice de réfraction de l'air dans la variante représentée. A titre d'exemple, l'élément au moins semi-transparent est en plastique, plus spécifiquement en polycarbonate ayant un indice de réfraction n = 1.65.

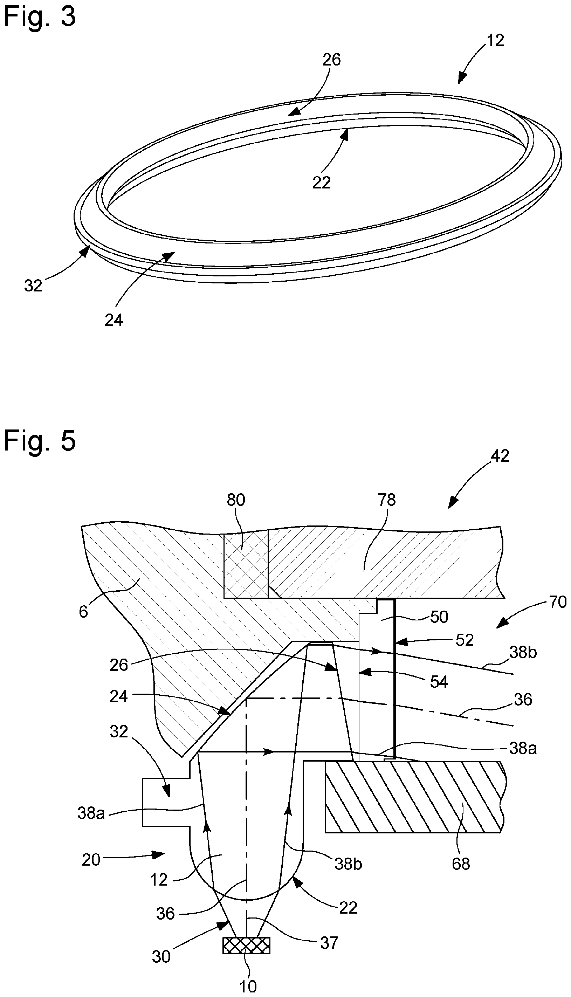

Selon une variante préférée, telle que représentée à la Figure 3, l'élément au moins semi-transparent 12 forme un anneau, circulaire dans la variante représentée ou autre dans d'autres variantes, qui est continu et fermé sur lui-même. Ceci est très avantageux pour éviter d'avoir au moins une zone plus sombre ou plus lumineuse le long du rehaut. Ladite au moins une source de lumière étant située en-dessous de l'élément annulaire 12, il est aisément possible d'agencer cette au moins une source de lumière pour qu'elle soit uniforme le long de l'élément annulaire 12 ou éventuellement périodique, avec plusieurs diodes électroluminescentes (acronyme : LED de l'anglais 'Light Emitting Diode') réparties avec un pas angulaire, notamment de 30° pour éclairer plus fortement les zones ayant les marques / index des heures.

Selon une caractéristique avantageuse de l'invention, la surface inférieure d'injection 22 de l'élément au moins semi-transparent 12 forme une lentille annulaire positive qui est agencée de manière à diriger, dans un quelconque plan transversal perpendiculaire à un axe annulaire central 23 de la lentille annulaire positive, sensiblement la totalité de la lumière injectée, se propageant dans ce quelconque plan transversal, en direction de la surface intermédiaire 24. A titre d'exemple, la lentille annulaire positive présente une section transversale sensiblement en demi-cercle avec un rayon de courbure r = 0.6 mm. Pour un élément annulaire 12 en polycarbonate, on obtient une distance focale f = 0.4 mm., Pour obtenir une intensité lumineuse non négligeable sur sensiblement toute la surface latérale de sortie 26, la source de lumière doit être située relativement proche de la surface d'entrée, de préférence sensiblement à la distance focale. Dans ce dernier cas, étant donné l'étendue de la source de lumière, le faisceau lumineux 30 présente une certaine ouverture lorsqu'il est incident sur la surface intermédiaire 24. La personne du métier saura, à l'aide d'outils de calcul appropriés, définir la position optimale pour chaque source de lumière notamment en fonction des dimensions et de la configuration de l'élément annulaire 12, de l'étendue de la source et éventuellement de son lobe d'émission.

Selon une autre caractéristique avantageuse, ladite au moins une source de lumière 10 est agencée de manière qu'un axe d'émission principal 37 de chaque source de lumière ou une surface d'émission principale de la source de lumière, lorsque celle-ci est étendue, soit sensiblement vertical(e) et confondu(e), en tout temps, avec une surface optique annulaire de la lentille annulaire positive 22, cette surface optique annulaire étant définie par l'axe optique vertical 36 que présente la lentille annulaire positive dans ledit quelconque plan transversal (plan des Figures 1 et 2).

Dans une première variante, ladite au moins une source de lumière est formée par une source annulaire quasi continue ou continue, notamment du type OLED (acronyme de l'anglais 'Organic Light Emitting Diode'). Le fait que la source de lumière 10 soit située sous l'élément annulaire au moins semi-transparent 12, servant à diriger la lumière vers l'espace d'affichage 70, est avantageux en particulier pour une source annulaire continue ou quasi continue du type OLED, car le support annulaire peut être plan, ce qui permet d'obtenir une telle source de lumière sans devoir plier le support pour lui donner une courbure annulaire comme dans le cas d'une source de lumière qui serait agencée latéralement à l'extérieur d'un élément annulaire de transmission de la lumière vers l'espace d'affichage. Dans une deuxième variante, ladite au moins une source de lumière est formée par une pluralité de sources lumineuses relativement peu étendues, notamment des LEDs, qui sont réparties uniformément le long de l'élément annulaire au moins semi-transparent 12, par exemple au nombre de douze ou vingt-quatre. Avec des micro-LEDs, on peut prévoir un grand nombre de celles-ci sur un support plan annulaire.

Dans une variante avantageuse, la surface intermédiaire 24 est configurée pour collimater, dans ledit quelconque plan transversal, ladite lumière injectée et dirigée dans la direction de cette surface intermédiaire par la lentille annulaire positive 22, et pour que cette lumière collimatée soit, au moins en majeure partie et de préférence sensiblement en totalité, incidente sur la surface latérale de sortie 26. A cet effet, le profil transversal de la surface intermédiaire 24 est un profil de Béziers qui peut être défini par un logiciel informatique spécifique. On notera que le profil transversal de la surface intermédiaire 24 peut être optimisé à l'aide d'un logiciel informatique en fonction de ladite au moins une source de lumière, notamment de son agencement, et des dimensions de l'élément annulaire 12.

Selon une caractéristique particulière, la surface intermédiaire 24 est configurée de manière que ladite lumière collimatée présente un axe optique de propagation 36 qui est horizontal entre la surface intermédiaire et la surface latérale de sortie 26 par laquelle le faisceau lumineux 30 sort de l'élément annulaire au moins semi-transparent 12.

Selon une caractéristique avantageuse, la surface latérale de sortie 26 est agencée pour permettre au faisceau de lumière collimaté 30, incident sur cette surface latérale de sortie, de sortir de l'élément au moins semi-transparent 12 par réfraction. On notera que la surface latérale de sortie 26, qui définit la surface latérale intérieure 28 du rehaut 14, peut subir divers traitements, notamment à des fins esthétiques. On peut par exemple prévoir le dépôt PVD d'un métal en couche très mince pour donner un aspect métallique pour un utilisateur de la montre, tout en garantissant une transparence suffisante et même quasi totale pour la lumière 30 se propageant selon l'axe de propagation 36 et incidente sur cette surface latérale de sortie. En particulier, la surface latérale de sortie 26 définit, dans ledit quelconque plan transversal, un segment de droite qui est orienté de manière que l'axe de propagation 36 de la lumière collimatée 30, incidente sur cette surface latérale de sortie 26, est incliné en direction du mouvement 4 en sortie de l'élément au moins semi-transparent 12. Dans la variante représentée où l'axe de propagation 36 est horizontal entre les surfaces 24 et 26, ledit segment de droite est oblique et la surface latérale de sortie 26 est tronconique. On remarquera que pour certaines montres, il peut être avantageux, notamment pour des raisons esthétiques, de prévoir un rehaut ayant une surface latérale verticale, c'est-à-dire cylindrique et en particulier circulaire. Dans ce cas, le dispositif d'éclairage, notamment la surface intermédiaire 24, est agencé de manière que l'axe de propagation du faisceau lumineux entre les surfaces 24 et 26 soit incliné vers le bas en direction de l'espace d'affichage 70, ce qui peut être en plus avantageux pour avoir une inclinaison plus grande de l'axe optique après la surface latérale de sortie 26.

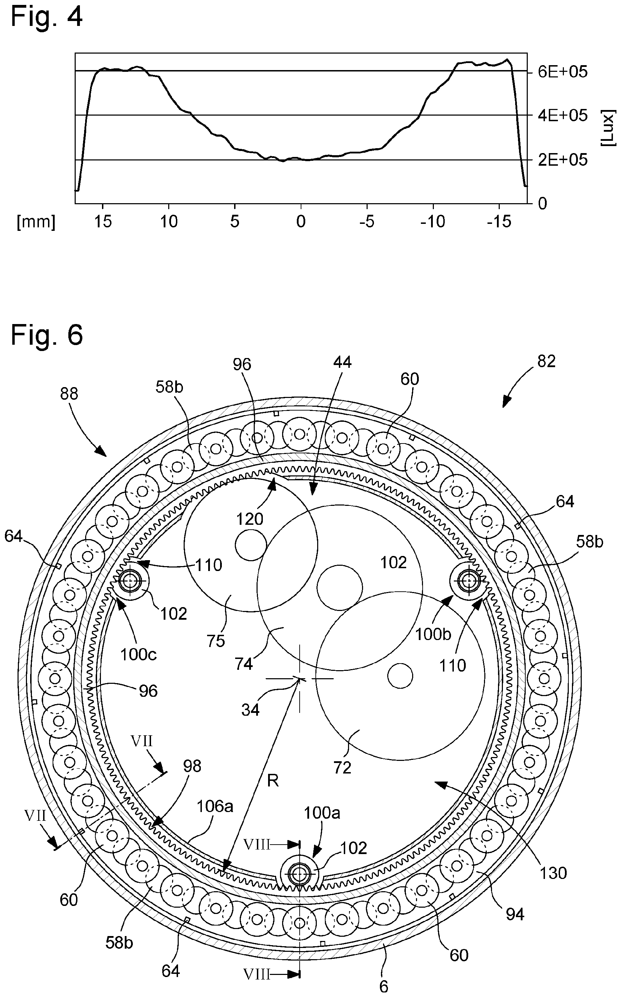

Dans une variante générale, la montre comprend un cadran 68 agencé sur le mouvement 4. L'orientation de l'axe de propagation 36 de la lumière collimatée 30 sortant de l'élément au moins semi-transparent 12 est sélectionnée de manière que cette lumière collimatée soit substantiellement incidente directement sur le cadran. Dans une variante avantageuse, le dispositif d'éclairage est agencé de manière que le cadran peut être atteint au moins quasi en tout point, pouvant être observé orthogonalement au cadran par l'utilisateur de la montre, directement par la lumière collimatée sortant de l'élément au moins semi-transparent 12. Dans une variante préférée, dans laquelle l'élément au moins semi-transparent 12 est circulaire, le dispositif d'éclairage est agencé de manière que la lumière collimatée sortant de cet élément semi-transparent soit, dans ledit quelconque plan transversal, incidente sur le cadran entre la surface latérale intérieure du rehaut et un axe central dudit espace d'affichage. La Figure 4 donne, pour une réalisation spécifique de la montre selon l'invention, un graphe du flux lumineux, selon un diamètre du cadran, incident sur ce dernier.

Dans la variante représentée, la montre 2 comprend un cercle d'encageage 8 pour le mouvement 4. Le cercle d'encageage 8 présente une surépaisseur annulaire extérieure contre laquelle est en appui une portée / partie saillante extérieure 32 de l'élément annulaire 12. A l'intérieur de la surépaisseur annulaire et en périphérie du mouvement 4 est agencé un support annulaire 40 (un PCB) sur lequel est agencée ladite au moins une source de lumière 10 et aussi des pistes conductrices pour sa connexion électrique à une source d'énergie électrique. Une entretoise annulaire 9 est située sur le support 40 à l'intérieur de ladite au moins une source de lumière 10 et de la lentille annulaire positive 22. Cette entretoise annulaire présente, du côté extérieur, une surface annulaire sur laquelle peut reposer un épaulement inférieur de l'élément annulaire 12 et, du côté intérieur, un décrochement définissant un épaulement pour une partie saillante supérieure et extérieure du mouvement 4. Les dimensions et les tolérances seront déterminées par la personne du métier, notamment pour que la partie de l'élément annulaire formant le rehaut 14 soit positionnée fixement entre la partie intérieure de la boîte 6 portant le verre 78 et le cadran 68 sans fentes indésirables. D'autres agencements et moyens de fixation de l'élément annulaire 12, de ladite au moins une source de lumière 10 et du mouvement peuvent évidemment être prévus.

La Figure 5 montre un deuxième mode de réalisation d'une montre 42 selon l'invention. Ce deuxième mode réalisation se distingue du premier mode de réalisation essentiellement par le fait que l'élément au moins semi-transparent 12 ne forme pas le rehaut, mais entoure extérieurement un rehaut 50, lequel est dans ce cas au moins semi-transparent en direction de l'espace d'affichage 70 pour une lumière fournie par ladite au moins une source lumineuse 10 et incidente sur une surface latérale extérieure 54 de ce rehaut. Par 'extérieure', on comprend une surface latérale opposée à une surface latérale intérieure 52 du rehaut 50, laquelle définit l'espace d'affichage 70. La surface latérale intérieure 52 peut être traitée pour masquer à un utilisateur de la montre la transparence du rehaut, notamment par un dépôt PVD métallique. Dans une variante, le rehaut 50 est agencé de manière à être essentiellement transparent pour la lumière de ladite au moins une source de lumière dans le sens traversant le rehaut vers l'espace d'affichage et essentiellement opaque dans l'autre sens pour la lumière se propageant dans cet espace d'affichage.

Les autres éléments ou parties déjà référencées et décrites dans le cadre du premier mode de réalisation ne seront pas à nouveau décrites ici. On notera que l'élément annulaire au moins semi-transparent 12 est optiquement semblable à celui déjà décrit dans le premier mode de réalisation, seule une partie de son contour extérieur étant différente mais les surfaces 22, 24 et 26 sont essentiellement identiques. On notera que d'autres agencements du rehaut sont envisageables. Dans une variante avantageuse, l'élément au moins semi-transparent 12 présente une hauteur, entre le cadran 68 et le verre 78, sensiblement égale à celle du rehaut 50, lequel présente une surface supérieure définissant un appui pour le verre 78. Dans ce cas, la surface latérale extérieure 54 du rehaut, prévu avec une section transversale sensiblement rectangulaire (c'est-à-dire sans le décrochement supérieur représenté à la Figure 5), est de préférence située verticalement dans l'épaisseur du joint d'étanchéité 80. Dans cette variante, une fixation du rehaut au cadran ou à l'élément annulaire peut être avantageuse.

En référence aux Figures 6 à 8, on décrira ci-après un troisième mode de réalisation d'une montre selon l'invention. La montre comprend un dispositif d'éclairage d'un espace d'affichage, ce dispositif d'éclairage étant alimenté par une génératrice mécano-électrique. Diverses caractéristiques de l'invention déjà présentées précédemment ne seront pas décrites à nouveau. En particulier, l'élément annulaire au moins semi-transparent 12a est optiquement semblable à l'élément annulaire 12 déjà décrit dans le cadre du premier mode de réalisation, la seule différence concernant l'absence d'une portée extérieure. Les surfaces optiquement actives, à savoir les surfaces 22, 24 et 26, sont essentiellement identiques.

La montre 82 comprend une boîte 6 qui incorpore un mouvement 44 (représenté partiellement à la Figure 6, il est situé entre le cadran 68 et le fond de la boîte) et une génératrice mécano-électrique 88 située dans une région périphérique au mouvement. La génératrice comprend un stator 90 et un rotor 92, lequel présente une structure annulaire et est guidé en rotation par au moins deux roulement à billes, de préférence trois roulements à billes 100a, 100b, 100c. De manière générale, la montre 82 comprend une pluralité de roulements à billes dont le diamètre est inférieur au rayon intérieur R du rotor, de préférence inférieur à la moitié de ce rayon intérieur. Chaque roulement à billes de ladite pluralité comprend une partie fixe 101 et une partie mobile 102 passant entre la partie fixe et le rotor 92, chaque partie mobile et le rotor étant configurés de manière que le rotor est supporté seulement par la pluralité des parties mobiles de la pluralité de roulements à billes et est capable de tourner autour de l'axe géométrique central 34 du rotor, qui est son axe de rotation. Chaque roulement comprend, de manière classique, des billes 103 entre sa partie fixe et sa partie mobile. Ce qui est particulier dans cette réalisation, c'est que la partie mobile des roulements à billes n'est pas solidaire du rotor annulaire périphérique 92 et ne fait donc pas partie de ce rotor. Les parties mobiles roulent le long d'une piste 97 usinée latéralement dans une partie intérieure 96 du rotor.

La piste 97 présente par exemple un profil, dans une section transversale, définissant trois segments linéaires dont les dimensions sont prévues pour que chaque partie mobile 102 présente un petit jeu dans la rainure formant ladite piste et soit en contact le long dudit profil, selon l'orientation spatiale de la montre, en un point ou deux points. De préférence, dans ce mode de réalisation avantageux, chaque roulement à billes est situé du côté intérieur du rotor et chaque partie fixe est montée dans le mouvement 44. Dans une variante, les parties fixes 101 sont montées sur un cercle d'encageage du mouvement. Le rotor 92 présente une denture intérieure 98 qui engrène avec une roue 75 d'un rouage d'entrainement (roues 74 et 75) agencé entre un barillet 72 et le rotor. Le mécanisme d'entrainement de la génératrice est prévu pour pouvoir entrainer sur commande la génératrice de manière contrôlée, notamment avec une vitesse de rotation supérieure à une vitesse minimale nécessaire au bon fonctionnement du dispositif d'éclairage prévu, selon l'agencement de génératrice 88, tant que le barillet est remonté / armé au-dessus d'un seuil inférieur.

Le rotor 92 présente sur toute sa hauteur un espace intérieur libre 130, lequel est traversé par l'axe géométrique 34 de rotation de ce rotor et dans lequel est situé partiellement le mouvement 44. Ensuite, le rotor 92 est situé sensiblement entièrement dans un espace périphérique au mouvement. De fait, dans la variante représentée, seuls les trois roulements à billes associés au rotor et supportant ce dernier, en le laissant libre en rotation, ainsi que la roue d'entrainement 75, qui engrène avec la denture intérieure 98 du rotor, sont en contact avec le rotor 92 et situés à l'intérieur de ce dernier. On peut donc dire que, dans la variante représentée, le rotor est situé entièrement dans un espace périphérique au mouvement 44. De plus, le stator 90 de la génératrice est également situé sensiblement entièrement dans un espace périphérique au mouvement. De fait, si on ne considère pas les évidements 110 et 120 effectués dans le stator comme englobés dans le volume propre du stator, on peut dire que le stator est aussi situé entièrement dans un espace périphérique au mouvement. Par conséquent, la génératrice mécano-électrique 88 est agencée sensiblement entièrement, de préférence entièrement dans un espace périphérique au mouvement de la montre.

Le rotor 92 porte avantageusement les bobines 60, lesquelles sont connectées, directement ou via un circuit électrique sans accumulateur et le cas échéant un circuit électronique, au dispositif d'éclairage, formé d'une pluralité de diodes électroluminescentes 64 (LEDs 64) agencées fixement sur le rotor. Plus précisément, le rotor comprend un support annulaire 94, formant un PCB rigide (acronyme de 'Printed Circuit Board'), qui présente des ouvertures circulaires dans lesquelles sont situées les bobines 60, lesquelles sont fixées solidement au support annulaire 94 qui est lui-même porté par la partie intérieure 96 du rotor. Les LEDs, les diverses connexions électriques formant un circuit électrique et, le cas échéant, tout circuit électronique autre que les LEDs sont agencés sur le PCB et portés par celui-ci. Ainsi, le rotor porte la totalité de l'équipement électrique et électronique du dispositif d'éclairage, formé par la pluralité de LEDs, les bobines de la génératrice 88, le circuit électrique d'interconnexion et, le cas échéant, tout autre élément électrique ou électronique associé au dispositif d'éclairage et à la génératrice mécano-électrique qui l'alimente.

Le stator 90 comprend une première série d'aimants permanents bipolaires 58a, à aimantation axiale, qui sont portés inférieurement par une première partie 106a d'une structure annulaire ferromagnétique formant un circuit magnétique de fermeture des champs magnétiques de la première série d'aimants 58a et également de la deuxième série d'aimants permanents 58b portés supérieurement par la deuxième partie 106b de la structure annulaire, laquelle est fixe. La structure annulaire comprend des évidements 110, pour les roulements à billes 100a, 110b et 110c, et un évidement 120 pour la roue d'entrainement 75. Ces évidements sont usinés dans la paroi latérale (paroi axiale / verticale) et éventuellement, comme représenté, également dans la deuxième partie 106b (partie inférieure du côté du fond de la boîte) pour faciliter le montage des roulements à billes et de la roue d'entrainement 75.

Dans une première variante représentée à la Figure 6, le nombre d'aimants de chaque série d'aimants est égal au nombre de bobines prévu, ce nombre étant trente-six dans la variante représentée. De manière avantageuse et non-limitative, ledit nombre est prévu entre vingt et quarante. Dans une deuxième variante, la génératrice mécano-électrique comprend deux fois plus d'aimants par série que de bobines, les aimants de chaque série ayant des polarités alternées.

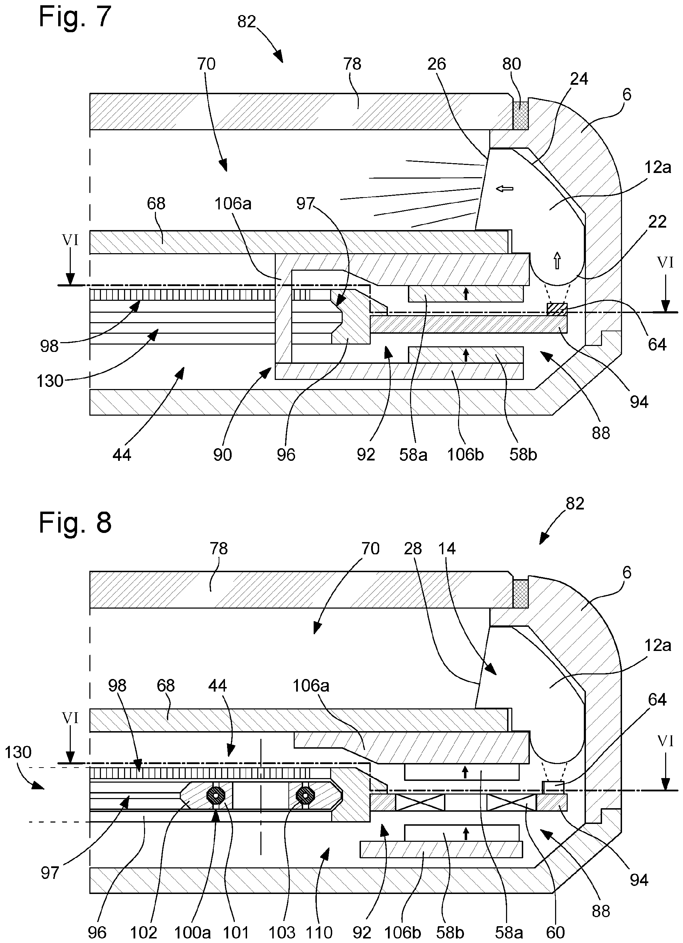

Le dispositif d'éclairage comprend un élément annulaire au moins semi-transparent 12a, similaire à celle décrit dans le premier mode de réalisation. Cet élément annulaire est agencé pour conduire la lumière produite par le dispositif d'éclairage, à savoir les LEDs 64, vers un espace d'affichage 70, dans lequel est situé un dispositif d'affichage analogique (non représenté) de la montre, l'espace d'affichage étant situé entre le cadran 68 et le verre supérieur 78. Selon une variante représentée aux Figures 7 et 8, l'élément annulaire 12a forme un rehaut de la montre entourant l'espace d'affichage 70. Dans la variante du mode de réalisation décrite ici, il est avantageux que les LEDs 64 soient situées du côté extérieur des bobines 60, étant donné que l'élément annulaire 12a forme un rehaut et est donc une pièce située à la périphérie du cadran 68.

Le troisième mode de réalisation présente un avantage majeur pour ce qui concerne l'éclairage de l'espace d'affichage 70. Cet avantage majeur vient du fait que les LEDs sont agencées sur le rotor et qu'elles tournent donc avec celui-ci. Ainsi, la surface tronconique 26 de l'élément annulaire 12a, définissant le rehaut, est balayée par la lumière produite par chacune des LEDs selon une direction tangentielle perpendiculaire à l'axe de rotation 34, c'est-à-dire selon une direction angulaire. Avec un nombre de LEDs relativement peu élevé, par exemple douze comme représenté à la Figure 3, et une vitesse de rotation du rotor qui soit suffisante, par exemple deux à quatre tours/ seconde, l'oeil d'un utilisateur perçoit alors un éclairage de l'espace d'affichage quasi homogène et quasi stationnaire car l'éclairage a lieu seulement lorsque la génératrice est activée et le rotor entrainé en rotation, l'énergie électrique engendrée étant fournie instantanément aux LEDs 64.

## Revendications

1. Montre (2, 42, 82) comprenant une boîte (6) munie d'un verre (78), un mouvement, un dispositif d'affichage analogique, un rehaut (14, 50) dont la surface latérale intérieure (28, 52) définit latéralement un espace d'affichage (70) pour le dispositif d'affichage analogique, et un dispositif d'éclairage (20) agencé pour pouvoir fournir de la lumière dans l'espace d'affichage au travers de ladite surface latérale intérieure, le dispositif d'éclairage comprenant au moins une source de lumière (10, 64) alimentée par une source d'électricité de la montre ; **caractérisée en ce que** le dispositif d'éclairage comprend un élément au moins semi-transparent (12, 12a) formant le rehaut ou entourant le rehaut, lequel est dans le dernier cas au moins semi-transparent en direction de l'espace d'affichage pour une lumière fournie par ladite au moins une source lumineuse et incidente sur une surface latérale extérieure de ce rehaut ; et **en ce que** l'élément au moins semi-transparent est agencé au-dessus de ladite au moins une source de lumière et présente :
- une surface inférieure d'injection (22) qui est configurée pour permettre une injection dans l'élément au moins semi-transparent d'au moins une majeure partie de la lumière (30) fournie par ladite au moins une source lumineuse,
- une surface latérale de sortie (26) par laquelle au moins une majeure partie de la lumière injectée dans l'élément au moins semi-transparent peut sortir de cet élément pour pénétrer dans l'espace d'affichage directement ou respectivement au travers du rehaut au moins semi-transparent, et
- une surface intermédiaire (24) configurée pour recevoir, sans réflexion antérieure, au moins une majeure partie de ladite lumière injectée, et pour réfléchir substantiellement ladite au moins une majeure partie de ladite lumière injectée en direction de la surface latérale de sortie.

2. Montre selon la revendication 1, **caractérisée en ce que** l'élément au moins semi-transparent (12, 12a) est agencé de manière que la réflexion de ladite au moins une majeure partie de ladite lumière injectée est une réflexion interne sur la surface intermédiaire (24) due à une différence d'indices de réfraction entre l'élément au moins semi-transparent et le milieu situé directement derrière celui-ci.

3. Montre selon la revendication 1 ou 2, **caractérisée en ce que** l'élément au moins semi-transparent (12, 12a) forme un anneau, circulaire ou autre, qui est continu et fermé sur lui-même.

4. Montre selon la revendication 3, **caractérisée en ce que** ladite surface inférieure d'injection (22) de l'élément au moins semi-transparent forme une lentille annulaire positive qui est agencée de manière à diriger, dans un quelconque plan transversal perpendiculaire à un axe annulaire central (23) de la lentille annulaire positive, sensiblement la totalité de la lumière injectée, se propageant dans ce quelconque plan transversal, en direction de ladite surface intermédiaire (24).

5. Montre selon la revendication 4, **caractérisée en ce que** ladite au moins une source de lumière (10, 64) est agencée de manière qu'un axe d'émission principal ou, le cas échéant, une surface d'émission principale de cette source de lumière soit vertical(e) et sensiblement confondu(e), en tout temps, avec une surface optique de la lentille annulaire positive, cette surface optique étant définie par un axe optique vertical que présente la lentille annulaire positive dans ledit quelconque plan transversal.

6. Montre selon la revendication 4 ou 5, **caractérisée en ce que** ladite au moins une source de lumière est formée par une source annulaire quasi continue ou continue (10), notamment du type OLED, ou par une pluralité de sources lumineuses (64), notamment des LEDs, réparties uniformément le long de l'élément au moins semi-transparent (12, 12a).

7. Montre selon une quelconque des revendication 4 à 6, **caractérisée en ce que** ladite surface intermédiaire (24) est configurée pour collimater, dans ledit quelconque plan transversal, ladite lumière injectée et dirigée dans la direction de cette surface intermédiaire par la lentille annulaire positive, et pour que cette lumière collimatée soit, de préférence sensiblement en totalité, incidente sur la surface latérale de sortie (26).

8. Montre selon la revendication 7, **caractérisée en ce que** ladite surface intermédiaire (24) est configurée de manière que ladite lumière collimatée présente un axe optique de propagation (36) qui est horizontal à la suite de la réflexion sur cette surface intermédiaire.

9. Montre selon la revendication 7 ou 8, **caractérisée en ce que** ladite surface latérale de sortie (26) est agencée pour permettre à la lumière collimatée, incidente sur cette surface latérale de sortie, de sortir de l'élément au moins semi-transparent par réfraction.

10. Montre selon la revendication 9, **caractérisée en ce que** la surface latérale de sortie (26) définit, dans ledit quelconque plan transversal, un segment de droite qui est orienté de manière qu'un axe de propagation (36) de ladite lumière collimatée et incidente sur la surface latérale de sortie est incliné en direction du mouvement à la sortie de l'élément au moins semi-transparent.

11. Montre selon la revendication 10 et comprenant un cadran (68) agencé sur le mouvement (4, 44), **caractérisée en ce que** l'orientation de l'axe (36) de propagation de la lumière collimatée sortant de l'élément au moins semi-transparent (12, 12a) est sélectionnée de manière que cette lumière collimatée sortant de cet élément au moins semi-transparent soit substantiellement incidente directement sur le cadran.

12. Montre selon la revendication 11, **caractérisée en ce que** le dispositif d'éclairage (20) est agencé de manière que le cadran puisse être atteint au moins quasi en tout point, pouvant être observé orthogonalement au cadran par un utilisateur de la montre, directement par la lumière collimatée sortant de l'élément au moins semi-transparent.

13. Montre selon la revendication 11 ou 12, dans laquelle l'élément semi-transparent (12, 12a) est circulaire, **caractérisée en ce que** la lumière collimatée sortant de cet élément semi-transparent est, dans ledit quelconque plan transversal, incidente sur le cadran entre la surface latérale intérieure (26, 52) du rehaut (14, 50) et un axe central (34) dudit espace d'affichage (70).

14. Montre selon une quelconque des revendications précédentes, **caractérisée en ce que** l'élément semi-transparent (12, 12a) forme ledit rehaut (14), la surface latérale intérieure (28) du rehaut étant confondue avec ladite surface latérale de sortie (26).

15. Montre selon une quelconque des revendications 1 à 14, **caractérisée en ce que** l'élément au moins semi-transparent (12) entoure le rehaut (50), lequel est au moins semi-transparent en direction de l'espace d'affichage (70) pour une lumière fournie par ladite au moins une source lumineuse (10) et incidente sur une surface latérale extérieure (54) de ce rehaut.

16. Montre selon une quelconque des revendications précédentes, **caractérisée en ce que** la source d'électricité est une génératrice mécano-électrique (88) incorporée dans la montre (82) et comprenant un rotor (92).

17. Montre selon la revendication 16, **caractérisée en ce que** la génératrice mécano-électrique (88) comprend des bobines (60), ledit rotor (92) portant les bobines et ladite au moins une source lumineuse (64).
